# EUROPÄISCHE PATENTANMELDUNG

(11) **EP 4 613 407 A1**
(43) Veröffentlichungstag der Anmeldung: **10.09.2025**
(21) Anmeldenummer: 25161325.3
(22) Anmeldetag: 03.03.2025
(51) Int. Cl.: B23B 31/02, B23B 31/117, B23Q 17/22

(54) **ADAPTER ZU EINER UNTERSTÜTZUNG EINER AUTOMATISIERTEN LÄNGENEINSTELLUNG EINES WERKZEUGS IN EIN WERKZEUGFUTTER, ADAPTERBAUKASTEN UND LÄNGENEINSTELLVERFAHREN**

(30) Priorität: 05.03.2024 DE 102024106351
(71) Anmelder: E. Zoller GmbH & Co. KG Einstell- und Messgeräte, 74385 Pleidelsheim (DE)
(72) Erfinder: Pfau, Christian, 74379 Ingersheim (DE); Reichardt, Andreas, 74343 Sachsenheim (DE)
(74) Vertreter: Daub, Thomas

(57) **Zusammenfassung**

Es wird ein Adapter (66) zu einer Unterstützung einer automatisierten Längeneinstellung eines Werkzeugs (10) in ein Werkzeugfutter (12), dessen Werkzeugspannprinzip auf einem Verpressen einer eine Aufnahmeausnehmung (14) für einen Werkzeugschaft (16) aufweisenden Spannzange (18) mit einem von der Spannzange (18) separierbaren Spannzangenhalter (20) basiert, insbesondere in ein powRgrip^{®}-Werkzeugfutter, umfassend ein erstes Adapterteil (30), welches einen Haltebereich (22) für eine, insbesondere aufrechte, Halterung der Spannzange (18) des einzustellenden Werkzeugfutters (12) aufweist, und umfassend ein von dem ersten Adapterteil (30) getrennt ausgebildetes zweites Adapterteil (40), welches einen Aufnahmebereich (24) für den Werkzeugschaft (16) des einzustellenden Werkzeugs (10) aufweist, vorgeschlagen.

## Beschreibung

### Stand der Technik

Die Erfindung betrifft einen Adapter nach dem Oberbegriff des Anspruchs 1, ein erstes Adapterteil nach dem Anspruch 13, ein zweites Adapterteil nach dem Anspruch 14, einen Adapterbaukasten nach dem Anspruch 15 und ein Längeneinstellverfahren nach dem Anspruch 16.

Es sind bereits Längeneinstelladapter für Werkzeugfutter, die nicht auf einem Verpressen einer eine Aufnahmeausnehmung für einen Werkzeugschaft aufweisenden Spannzange mit einem von der Spannzange separierbaren Spannzangenhalter basieren, bekannt. Ein Typ Werkzeugfutter, für den der erfindungsgemäße Adapter speziell geeignet ist, ist in der Druckschrift EP 1 291 103 A1 beschrieben.

Die Aufgabe der Erfindung besteht insbesondere darin, einen gattungsgemäßen Adapter mit vorteilhaften Eigenschaften hinsichtlich einer Längeneinstellung von Werkzeugen in spezielle Werkzeugfutter bereitzustellen. Die Aufgabe wird erfindungsgemäß durch die Merkmale der unabhängigen und nebengeordneten Patentansprüche gelöst, während vorteilhafte Ausgestaltungen und Weiterbildungen der Erfindung den Unteransprüchen entnommen werden können.

### Vorteile der Erfindung

Es wird ein Adapter zu einer Unterstützung einer automatisierten Längeneinstellung eines Werkzeugs in ein Werkzeugfutter, dessen Werkzeugspannprinzip auf einem Verpressen einer eine Aufnahmeausnehmung für einen Werkzeugschaft aufweisenden Spannzange mit einem von der Spannzange separierbaren Spannzangenhalter basiert, insbesondere in ein powRgrip^{®}-Werkzeugfutter, umfassend ein erstes Adapterteil, welches einen Haltebereich für eine, insbesondere aufrechte, Halterung der Spannzange des einzustellenden Werkzeugfutters aufweist und umfassend ein von dem ersten Adapterteil getrennt ausgebildetes zweites Adapterteil, welches einen Aufnahmebereich für einen Werkzeugschaft des einzustellenden Werkzeugs aufweist, vorgeschlagen.

Dadurch kann vorteilhaft ein Längeneinstellvorgang für Werkzeuge in entsprechende Werkzeugfutter verbessert, insbesondere vereinfacht und/oder präzisionsoptimiert werden. Vorteilhaft kann eine Ermöglichung und/oder Vereinfachung einer Automatisierung des Längeneinstellvorgangs erreicht werden. Dadurch kann vorteilhaft eine Effizienz der Verwendung von entsprechenden Werkzeugfuttern gesteigert werden. Vorzugsweise ist der Adapter genau zweiteilig ausgebildet. Es ist jedoch auch denkbar, dass der Adapter noch weitere Adapterteile neben dem ersten Adapterteil und dem zweiten Adapterteil aufweist. Der Adapter ist insbesondere zu einem Voreinstellen, vorzugsweise Längen-Voreinstellen, des Werkzeugs in der Spannzange des Werkzeugfutters vorgesehen. Vorzugsweise ist der Adapter zu einer externen Voreinstellung, insbesondere Längen-Voreinstellung des Werkzeugs in der von einem Spannzangenhalter des Werkzeugfutters separierten Spannzange vorgesehen. Insbesondere ist der Adapter zu einer Verwendung in einem vollständig von Bedienereingriffen freien Längeneinstellverfahren vorgesehen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Der Adapter ist insbesondere ein Längeneinstelladapter.

Unter einem "Werkzeug" soll insbesondere ein Werkzeug mit einem zylindrischen Schaft verstanden werden. Insbesondere ist das Werkzeug als ein Zerspanungswerkzeug ausgebildet. Insbesondere ist das Werkzeug als ein Präzisionswerkzeug ausgebildet. Insbesondere ist das Werkzeug als eine Reibahle, ein Wälzfräser, ein Meißel, ein Senker und/oder vorzugsweise als ein Bohrer und/oder ein Fräser ausgebildet. Unter einem "Werkzeugfutter" soll insbesondere ein Bauteil verstanden werden, welches zu einer Aufnahme eines Werkzeugs und einer Verbindung des Werkzeugs mit einer Maschine vorgesehen ist. Insbesondere ist das Werkzeugfutter als eine Schnittstelle zwischen Werkzeug und Maschine ausgebildet. Vorzugsweise ist das Werkzeugfutter als ein Spannzangenfutter ausgebildet. Insbesondere weist das Spannzangenfutter eine Spannzange auf. Insbesondere ist die Spannzange dazu vorgesehen, das Werkzeug kraftschlüssig einzuspannen. Bevorzugt ist das Werkzeugfutter als ein powRgrip^{®}-Werkzeugfutter der Firma REGO-FIX (Tenniken, Schweiz) ausgebildet. Insbesondere ist das Werkzeugfutter zumindest zweiteilig mit der Spannzange und dem Spannzangenhalter ausgebildet. Der Spannzangenhalter stellt dabei eine Schnittstelle für Werkzeugmaschinen oder dergleichen (z.B. einen Hohlschaftkegel (HSK)-Schnittstelle) bereit. Die Spannzange stellt dabei eine Schnittstelle für die Schaftwerkzeuge bereit. Insbesondere wird das Werkzeugfutter mittels eines maschinellen Einpressens der Spannzange in den Spannzangenhalter, z.B. durch eine hydraulische Presse, montiert. Insbesondere wird das Werkzeugfutter mittels eines maschinellen Herausziehens der Spannzange aus dem Spannzangenhalter, z.B. durch die hydraulische Presse, demontiert. Die Spannzange stellt vorzugsweise einen Spannbereich für einen Werkzeugschaft des Schaftwerkzeugs bereit, welcher bei der Montage zumindest radial zusammengepresst wird und/oder welcher sich nach der Demontage zumindest radial aufweitet.

Der Haltebereich des ersten Adapterteils ist vorzugsweise als eine Bohrung, insbesondere Sacklochbohrung, ausgebildet. Der Haltebereich umschließt in einem die Spannzange aufnehmenden Zustand zumindest einen Teil der Spannzange in einer Umfangsrichtung. Der Haltebereich ist vorzugsweise zylindrisch geformt. Der Haltebereich ist vorzugsweise frei von einem Kegel / von einer Kegelsteigung. Der Aufnahmebereich des zweiten Adapterteils ist vorzugsweise als eine Bohrung, insbesondere Durchgangsbohrung, ausgebildet. Der Aufnahmebereich umschließt in einem das Schaftwerkzeug halternden Zustand zumindest einen Teil dessen Werkzeugschafts in der Umfangsrichtung. Der Aufnahmebereich ist vorzugsweise zylindrisch geformt. Der Aufnahmebereich ist vorzugsweise frei von einem Kegel / von einer Kegelsteigung. Insbesondere sind der Haltebereich des ersten Adapterteils und der Aufnahmebereich des zweiten Adapterteils bei einer Längen-Voreinstellung mittels des Adapters koaxial hintereinander angeordnet.

Insbesondere kann durch die Zweiteiligkeit des Adapters eine erhöhte Beweglichkeit des Werkzeugs bei der Längeneinstellung erreicht werden. Wenn das Werkzeug direkt in der Spannzange auf Länge eingestellt werden würde könnte es vorkommen, dass das Werkzeug in der Spannzange verhakt und der Bewegung einer Längeneinstellschraube der Spannzange nicht exakt folgen kann. Um die Beweglichkeit des Werkzeugs in dem zweiten Adapterteil ausreichend hoch zu halten, kann der Aufnahmebereich des zweiten Adapterteils einen leicht größeren Innendurchmesser aufweisen als die einzustellende Spannzange und/oder als ein Außendurchmesser des einzustellenden Werkzeugs. Zudem kann durch die Zweiteiligkeit des Adapters vorteilhaft erreicht werden, dass das einzustellende Werkzeug während der Längeneinstellung rotatorisch unbewegt bleibt, also nicht durch die Rotation der Längeneinstellschraube während der Längeneinstellung verdreht wird und nicht der Rotation der Längeneinstellschraube folgt. Ein Verdrehen des Werkzeugs kann nachteilhaft dazu führen, dass sich das Werkzeug während der Längeneinstellung aus einem Fokus und/oder aus einem Blickfeld einer Kamera eines die Längeneinstellung vornehmenden Werkzeugeinstell- und/oder Werkzeugmessgeräts herausbewegt wodurch ein, insbesondere zumindest mit einem Zeitverlust verbundenes, erneutes Messen und/oder ein Korrigieren erforderlich werden würde.

Ferner wird vorgeschlagen, dass das erste Adapterteil eine in den Haltebereich mündende axiale Durchgangsbohrung aufweist, welche zu einer Aufnahme eines Längeneinstellpins eines Werkzeug-Einstell- und Werkzeug-Messgeräts vorgesehen ist. Dadurch kann vorteilhaft eine einfache automatisierte Längeneinstellung erlaubt werden, welche insbesondere mit bekannten auf der Verwendung von Längeneinstellpins basierenden Längeneinstellgeräten durchführbar ist. Die axiale Durchgangsbohrung des ersten Adapterteils ist insbesondere koaxial zu dem Haltebereich an den Haltebereich anschließend angeordnet. Insbesondere erstreckt sich die Durchgangsbohrung zentral und in Längsrichtung durch das erste Adapterteil. Insbesondere schafft die Durchgangsbohrung eine Öffnung des Haltebereichs auf einer der Aufnahmeseite für die Spannzange gegenüberliegenden Seite des ersten Adapterteils. Insbesondere erstreckt sich die Durchgangsbohrung von einem Boden des sacklochartigen Haltebereichs bis zu einem axialen Ende des ersten Adapterteils. Unter einem "Werkzeug-Einstell- und/oder Werkzeug-Messgerätgerät" soll insbesondere ein Gerät verstanden werden, welches zumindest dazu vorgesehen ist, zumindest eine Länge eines Werkzeugs und/oder einer Werkzeugfutter-Werkzeug-Kombination zumindest teilweise zu erfassen und/oder einzustellen. Vorzugsweise weist das Werkzeug-Einstell- und/oder Werkzeug-Messgerätgerät eine Längen-Einstellpräzision und/oder eine Längen-Mess-Präzision im Bereich von Mikrometern oder darunter auf. Insbesondere ist der Längeneinstellpin stabartig ausgebildet und zumindest angetrieben axial verfahrbar. Zudem kann der Längeneinstellpin angetrieben rotierbar sein. Der Längeneinstellpin kann außerdem an einem freien Ende eine Werkzeugfläche, beispielsweise einen Außensechskant, z.B. zu einer Wechselwirkung mit einer Längeneinstellschraube des Werkzeugfutters, vorzugsweise der Spannzange, aufweisen.

Des Weiteren wird vorgeschlagen, dass das erste Adapterteil eine Verbindungseinheit zu einer zumindest axialen Halterung des zweiten Adapterteils aufweist. Dadurch kann vorteilhaft eine präzise und/oder reproduzierbare relative Positionierung der Adapterteile zueinander erleichtert und/oder ermöglicht werden. Vorteilhaft kann eine hohe Einstellpräzision der Längeneinstellung erreicht werden. Insbesondere weist die Verbindungseinheit einen oder mehrere Haltearme auf, die dem ersten Adapterteil zugeordnet sind und die zu einer Wechselwirkung mit Haltevorsprüngen des zweiten Adapterteils vorgesehen sind. Das zweite Adapterteil weist insbesondere die Haltevorsprünge auf. Die Haltevorsprünge sind vorzugsweise in Umfangsrichtung rund eine radiale Außenseite des zweiten Adapterteils unterbrochen umlaufend angeordnet. Insbesondere ist an jedem der Haltearme zumindest eine Kugeldruckschraube oder zumindest ein anderes Kugeldruckstück angeordnet, welche dazu vorgesehen ist, im montierten Zustand auf eine Oberfläche eines der Haltevorsprünge zu drücken und dadurch das zweite Adapterteil zumindest axial zu dem ersten Adapterteil zu positionieren. Die Verbindungseinheit ist insbesondere analog zu einem Bajonettverschluss verschließbar. Durch eine Drehung des ersten Adapterteils relativ zu dem zweiten Adapterteil oder umgekehrt kommen jeweils ein Haltearm und ein Haltevorsprung in axialen Überlapp zueinander, so dass der Haltearm eine in Axialrichtung wirkende Kraft auf den Haltevorsprung ausübt. Die Axialrichtung verläuft insbesondere parallel zu einer Längserstreckung / einer Rotationssymmetrieachse des Haltebereichs und/oder des Aufnahmebereichs.

Außerdem wird vorgeschlagen, dass das erste Adapterteil eine an ein axiales Ende des Haltebereichs anschließende Plananlagefläche für einen Anlagekragen der Spannzange ausbildet. Dadurch kann vorteilhaft eine einfache und/oder zuverlässige Zentrierung der Spannzange in dem Haltebereich erreicht werden. Vorteilhaft kann ein schiefes Einsetzen der Spannzange vermieden oder zumindest einfach erkannt werden. Insbesondere ist der Anlagekragen der Spannzange verschieden von einem Presskragen der Spannzange, der zu einem Ansetzen einer Hydraulikpresse beim Einpressen der Spannzange in den Spannzangenhalter vorgesehen ist. Der Anlagekragen befindet sich vorzugsweise in Axialrichtung unterhalb des Presskragens. Der Anlagekragen befindet sich vorzugsweise im ordnungsgemäß montierten Zustand der Spannzange auf einer dem Spannzangenhalter zugewandten Seite der Spannzange.

Weiterhin wird vorgeschlagen, dass das erste Adapterteil eine Schnittstelleneinheit zu einem, insbesondere aufrechten, Einsetzen des ersten Adapterteils in ein Werkzeug-Einstell- und Werkzeug-Messgerät aufweist. Dadurch kann vorteilhaft eine hohe Kompatibilität erreicht werden. Zudem kann eine Automatisierung des Längeneinstellprozesses erleichtert werden. In einem aufrechten Zustand überlappt vorzugsweise eine Axialrichtung eines Objekts / eine Haupterstreckungsrichtung eines Objekts / eine Rotationsachse eines Objekts mit einer Vertikalrichtung / Gravitationsrichtung. Die Schnittstelleneinheit umfasst insbesondere eine Schnittstelle, welche einer bekannten Werkzeugfutterschnittstelle / Werkzeugmaschinenschnittstelle, wie z.B. HSK oder SK, etc., entspricht. Die Schnittstelleneinheit ist insbesondere in Axialrichtung unterhalb des Haltebereichs und/oder unterhalb der Durchgangsbohrung angeordnet.

Zusätzlich wird vorgeschlagen, dass das zweite Adapterteil eine Hubstange aufweist, welche von einer, einer Aufnahmeöffnung des Aufnahmebereichs gegenüberliegenden Seite in den Aufnahmebereich hineinragt und welche an einem dem Aufnahmebereich zugewandten axialen Ende einen Anschlag für den Werkzeugschaft des einzustellenden Werkzeugs ausbildet. Dadurch kann vorteilhaft eine präzise Längeneinstellmöglichkeit für Spannzangen bereitgestellt werden. Insbesondere ist die Hubstange dazu vorgesehen, eine Einstellung einer Längeneinstellschraube der Spannzange auf das zweite Adapterteil zu übertragen. Insbesondere ist die Hubstange dazu vorgesehen, einen fixen, exakt bekannten Abstand zwischen der Längeneinstellschraube der Spannzange und einer Unterseite des Werkzeugschafts des Werkzeugs festzulegen, welcher bei der automatisierten Längeneinstellung von dem Werkzeug-Einstell- und Werkzeug-Messgerät berücksichtigt und vorzugsweise herausgerechnet werden kann. Die Hubstange ist vorzugsweise zylindrisch geformt. Die Hubstange ist vorzugsweise drehbar gelagert. Die Hubstange kann längsverschieblich gelagert sein. Vorzugsweise ist die Hubstange jedoch rotatorisch fixiert. Der Anschlag für den Werkzeugschaft des einzustellenden Werkzeugs bildet vorzugsweise eine Form der Längeneinstellschraube der Spannzange nach. Dabei kann der Anschlag beispielsweise auch eine Spitze der Längeneinstellschraube nachbilden.

Überdies wird vorgeschlagen, dass die Hubstange einen Teilbereich aufweist, der auf einer von einer Aufnahmeöffnung des Aufnahmebereichs wegweisenden Seite des zweiten Adapterteils über einen den Aufnahmebereich ausbildenden Grundkörper des zweiten Adapterteils axial hinaussteht. Dadurch kann vorteilhaft eine präzise Längeneinstellmöglichkeit für Spannzangen bereitgestellt werden. Die Hubstange weist an einem axial aus dem Grundkörper hinausstehenden axialen Ende einen Anschlag für die Längeneinstellschraube der Spannzange auf. Dieser Anschlag kann die Form eines Werkzeugschafts nachbilden. Zumindest ein Großteil der Hubstange steht axial aus dem Grundkörper des zweiten Adapterteils hervor. Unter einem "Großteil" soll insbesondere 66%, vorzugsweise 80%, verstanden werden. Ein Abstand zwischen den beiden Anschlägen an den axialen Enden der Hubstange ist konstant und vorzugsweise exakt bekannt. Die Hubstange weist einen Durchmesser auf, welcher einem typischen / normierten Schaftdurchmesser eines Schaftwerkzeugs entspricht. Für verschiedene Schaftwerkzeuge können verschiedene zweite Adapterteile mit jeweils unterschiedlichen Hubstangendicken vorgesehen sein. Genauso können für verschiedene Spannzangen verschiedene erste Adapterteile mit jeweils unterschiedlichen Durchmessern der Haltebereiche vorgesehen sein. Die (Innen-)Durchmesser der Haltebereiche der ersten Adapterteile entsprechen vorzugsweise etwa den typischen / normierten (Außen-)Durchmessern von Spannzangen. Der axial aus dem Grundkörper herausstehende Teil der Hubstange hat vorzugsweise einen konstanten Querschnitt. Es ist jedoch auch denkbar, dass der axial aus dem Grundkörper herausstehende Teil der Hubstange zwei oder mehr konstante Querschnitte aufweist, also beispielsweise mit wenigstens einer Nut versehen ist.

Zudem wird vorgeschlagen, dass der axial über den Grundkörper hinausstehende Teilbereich der Hubstange dazu vorgesehen ist, in die Aufnahmeausnehmung der Spannzange versenkt zu werden. Dadurch kann vorteilhaft eine Übertragung einer Längeneinstellung der Längeneinstellschraube auf das zweite Adapterteil ermöglicht werden. Insbesondere weist die Hubstange einen Außendurchmesser auf, welcher leicht kleiner ist als der Innendurchmesser / Spannzangendurchmesser einer Aufnahmeausnehmung der Spannzange, so dass vorteilhaft eine hohe axiale Beweglichkeit der Hubstange in der Spannzange sichergestellt werden kann.

Wenn der axial über den Grundkörper hinausstehende Teilbereich der Hubstange an einem von dem Aufnahmebereich abgewandten axialen Ende einen Anschlag für eine Längeneinstellschraube der Spannzange aufweist, kann vorteilhaft eine exakte Längeneinstellung ermöglicht werden, bei welcher insbesondere der Abstand zwischen der Spitze der Längeneinstellschraube und dem axialen Ende des Werkzeugschafts exakt bekannt und durch das Werkzeug-Einstell- und Werkzeug-Messgerät herausrechenbar ist.

Außerdem wird vorgeschlagen, dass die Hubstange zu einem Übertragen einer axialen Verstellbewegung einer Längeneinstellschraube der Spannzange an den Werkzeugschaft eines in dem Aufnahmebereich des zweiten Adapterteils aufgenommenen Werkzeugs vorgesehen ist. Dadurch kann vorteilhaft die zuvor beschriebene exakte Längeneinstellung ermöglicht werden. Insbesondere ist die Hubstange in dem Grundkörper des zweiten Adapterteils axialbeweglich gelagert.

Ferner wird vorgeschlagen, dass die Hubstange eine Verdrehsicherung aufweist.

Dadurch kann vorteilhaft eine Übertragung einer (unkontrollierbaren) Verdrehbewegung von der Längeneinstellschraube auf das Werkzeug via der Hubstange vermieden werden. Ein (unkontrolliertes) Verdrehen des Werkzeugs während der Längeneinstellung kann Messergebnisse des Werkzeug-Einstell- und Werkzeug-Messgeräts beeinflussen und dadurch insbesondere eine Genauigkeit der Längeneinstellung beeinträchtigen. Vorteilhaft kann mittels des Adapters eine Längeneinstellgenauigkeit im Mikrometer-Bereich erreicht werden. Die Verdrehsicherung kann als ein in den Grundkörper des zweiten Adapterteils eingreifender Pin der Hubstange ausgebildet sein. Der Pin ist in diesem Fall insbesondere ein Teil der Hubstange oder zumindest rotatorisch mit der Hubstange verbunden / gekoppelt und steht vorzugsweise in Radialrichtung von der Hubstange ab / über einen Zylindermantel der Hubstange hinaus. Die Hubstange kann mehrere derartige Pins aufweisen. Der Pin kann die Hubstange vollständig durchdringen und auf zwei gegenüberliegenden Seiten der Hubstange hervorstehen. Alternativ kann die Verdrehsicherung als eine axial erstreckte Nut in der Hubstange ausgebildet sein, welche zu einem Eingreifen eines Teils des Grundkörpers oder eines mit dem Grundkörper verbundenen Pins vorgesehen ist. Die Verdrehsicherung verhindert vorzugsweise ein Verdrehen der Hubstange in dem Grundkörper / relativ zu dem Grundkörper. Die Verdrehsicherung verhindert vorzugsweise ein Übertragen einer Rotationsbewegung der Längeneinstellschraube auf die Hubstange und damit auch auf das Werkzeug.

Des Weiteren wird vorgeschlagen, dass das zweite Adapterteil ein Schnittstellenelement für einen Robotergreifer aufweist. Dadurch kann vorteilhaft eine Automatisierbarkeit einer Längeneinstellung von entsprechenden mittels Verpressen montierten Werkzeugfuttern verbessert werden. Das Schnittstellenelement ist insbesondere ein integrales und/oder monolithisches Teil des Grundkörpers des zweiten Adapterteils. Außerdem können separate Griffelemente für ein manuelles Handling des zweiten Adapterteils an dem Grundkörper vorgesehen sein.

Außerdem werden das erste Adapterteil des Adapters und/oder das zweite Adapterteil des Adapters auch separat und alleine oder als Ersatzteil vorgeschlagen. Dadurch kann vorteilhaft ein Längeneinstellvorgang für Werkzeuge in entsprechende Werkzeugfutter verbessert, insbesondere vereinfacht und/oder präzisionsoptimiert werden.

Zusätzlich wird ein Adapterbaukasten zu einer Bereitstellung einer Mehrzahl an für verschiedene Werkzeuge und Werkzeugfutter geeigneten Adaptern vorgeschlagen, mit einer Mehrzahl (zwei oder mehr) an ersten Adapterteilen, deren Haltebereiche jeweils unterschiedlich große Durchmesser für die Aufnahme unterschiedlich großer, insbesondere normierter, Spannzangen aufweisen und mit einer Mehrzahl (zwei oder mehr) an zweiten Adapterteilen, deren Hubstangen und/oder Aufnahmebereiche jeweils unterschiedlich große Durchmesser aufweisen, die jeweils auf, insbesondere normierte, Spannzangendurchmesser der Aufnahmeausnehmung der unterschiedlich großen Spannzangen angepasst sind. Dadurch kann vorteilhaft eine hohe Flexibilität erreicht werden. Vorteilhaft kann zudem eine Automatisierung erleichtert und/oder verbessert werden, insbesondere indem eine breite Palette von passenden Adaptern für verschiedene Werkzeuge, Werkzeugfutter und Werkzeug-Werkzeugfutter-Kombinationen bereitgestellt werden kann.

Ferner wird ein Längeneinstellverfahren zu einer Einstellung einer Einspannlänge eines Werkzeugs in einem Werkzeugfutter, dessen Werkzeugspannprinzip auf einem Verpressen einer eine Aufnahmeausnehmung für einen Werkzeugschaft aufweisenden Spannzange mit einem von der Spannzange separierbaren Spannzangenhalter basiert, insbesondere in ein powRgrip^{®}-Werkzeugfutter, mit Hilfe des Adapters vorgeschlagen. Dadurch kann vorteilhaft ein Längeneinstellvorgang für Werkzeuge in entsprechende Werkzeugfutter verbessert, insbesondere vereinfacht und/oder präzisionsoptimiert werden. Vorteilhaft kann eine Ermöglichung und/oder Vereinfachung einer Automatisierung des Längeneinstellvorgangs erreicht werden. Dadurch kann vorteilhaft eine Effizienz der Verwendung von entsprechenden Werkzeugfuttern gesteigert werden.

Zudem wird vorgeschlagen, dass das Längeneinstellverfahren zumindest die folgenden Verfahrensschritte umfasst: a) Einsetzen der Spannzange in den Haltebereich des ersten Adapterteils des Adapters b) Einsetzen des zweiten Adapterteils in das erste Adapterteil, wobei eine Hubstange des zweiten Adapterteils in die Aufnahmeausnehmung der Spannzange eingeführt wird, c) optional Verriegeln der Axialpositionen der beiden Adapterteile zueinander, d) Einsetzen des Werkzeugs in den Aufnahmebereich des zweiten Adapterteils, so dass der Werkzeugschaft des Werkzeugs an einem axialen Ende der Hubstange anschlägt, e) Vermessen einer axialen Länge der Kombination aus den beiden Adapterteilen und dem Werkzeug mittels eines Werkzeug-Einstell- und Werkzeug-Messgeräts, f) Berechnen eines Einstellbedarfs, um eine gewünschte axiale Längeneinstellung des Werkzeugs zu erhalten, wobei eine bekannte axiale Gesamtlänge der Hubstange berücksichtigt wird, g) Einstellen einer axialen Position einer Längeneinstellschraube der Spannzange basierend auf den Messergebnissen des Werkzeug-Einstell- und Werkzeug-Messgeräts, wobei eine Bewegung der Längeneinstellschraube, insbesondere lediglich eine axiale Komponente der Bewegung der Längeneinstellschraube, über die Hubstange auf das Werkzeug übertragen wird, welches dadurch in seiner Axialposition verstellt wird, h) optional Kontrollieren der Längeneinstellung mittels einer erneuten Vermessung der axialen Länge der Kombination aus den beiden Adapterteilen und dem Werkzeug mittels des Werkzeug-Einstell- und Werkzeug-Messgeräts, i) Entnehmen des Werkzeugs aus dem zweiten Adapterteil, j) Trennen der beiden Adapterteile, k) Entnehmen der Spannzange aus dem ersten Adapterteil, I) Einsetzen der die Einstellung der Längeneinstellschaube beibehaltenden Spannzange in den Spannzangenhalter, m) Einsetzen des Werkzeugs in die Spannzange auf Anschlag mit der Längeneinstellschraube und n) Spannen der Spannzange durch Einpressen in den Spannzangenhalter, sodass das Werkzeug in der eingestellten axialen Position in dem Werkzeugfutter fixiert wird. Dadurch kann vorteilhaft ein Längeneinstellvorgang für Werkzeuge in entsprechende Werkzeugfutter verbessert, insbesondere vereinfacht und/oder präzisionsoptimiert werden.

Wenn dabei zumindest die Spannzange, das Werkzeug und das erste Adapterteil während eines gesamten Verfahrensablaufs ausschließlich von einem oder mehreren Handhabungsrobotern bewegt werden, kann vorteilhaft eine hohe Effizienz und/oder Sicherheit, insbesondere Bedienersicherheit und/oder Betriebssicherheit, erreicht werden.

Der erfindungsgemäße Adapter und das erfindungsgemäße Längeneinstellverfahren sollen hierbei nicht auf die oben beschriebene Anwendung und Ausführungsform beschränkt sein. Insbesondere kann der erfindungsgemäße Adapter und das erfindungsgemäße Längeneinstellverfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische perspektivische Darstellung eines Werkzeugeinstell- und/oder Werkzeugmessgeräts zu einer Verwendung eines Adapters in einem Längeneinstellverfahren,
- Fig. 2: eine schematische perspektivische Darstellung eines ersten Adapterteils des Adapters,
- Fig. 3: eine schematische perspektivische Darstellung eines zweiten Adapterteils des Adapters,
- Fig. 4: eine schematische Schnittdarstellung des Adapters mit beiden Adapterteilen, mit einem Werkzeug, mit einer Spannzange eines Werkzeugfutters und mit einem Längeneinstellpin des Werkzeugeinstell- und/oder Werkzeugmessgeräts,
- Fig. 5: eine schematische Illustration mehrerer Zwischenschritte des den Adapter verwendenden Längeneinstellverfahrens,
- Fig. 6: eine schematische perspektivische Darstellung einer Hubstange des zweiten Adapterteils mit einer Verdrehsicherung,
- Fig. 7: eine schematische Darstellung eines Adapterbaukastens zur Herstellung unterschiedlicher Adapter sowie je zwei unterschiedliche Werkzeuge und Spannzangen und
- Fig. 8: ein schematisches Ablaufdiagramm des Längeneinstellverfahrens.

### Beschreibung des Ausführungsbeispiels

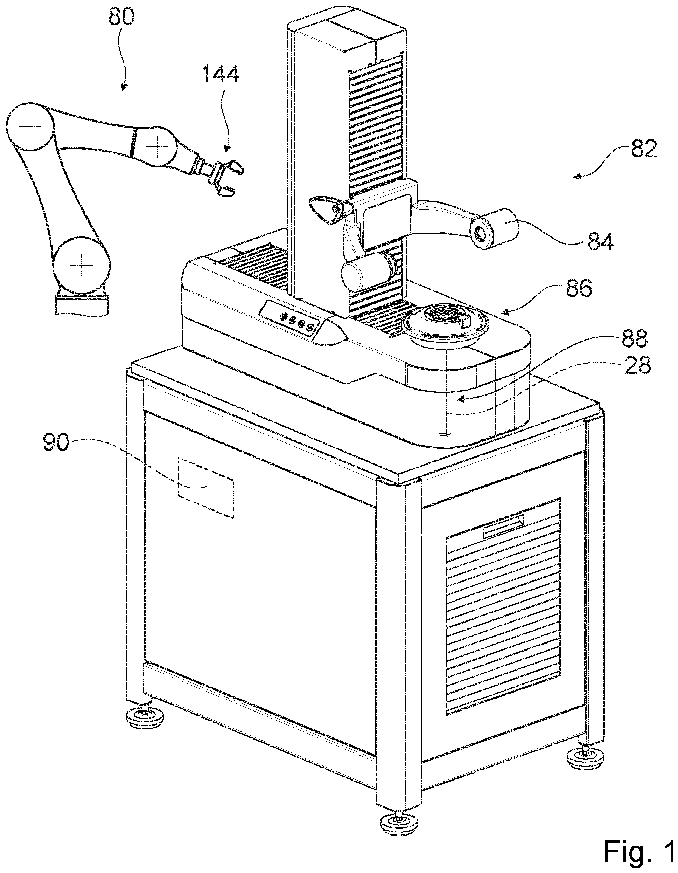

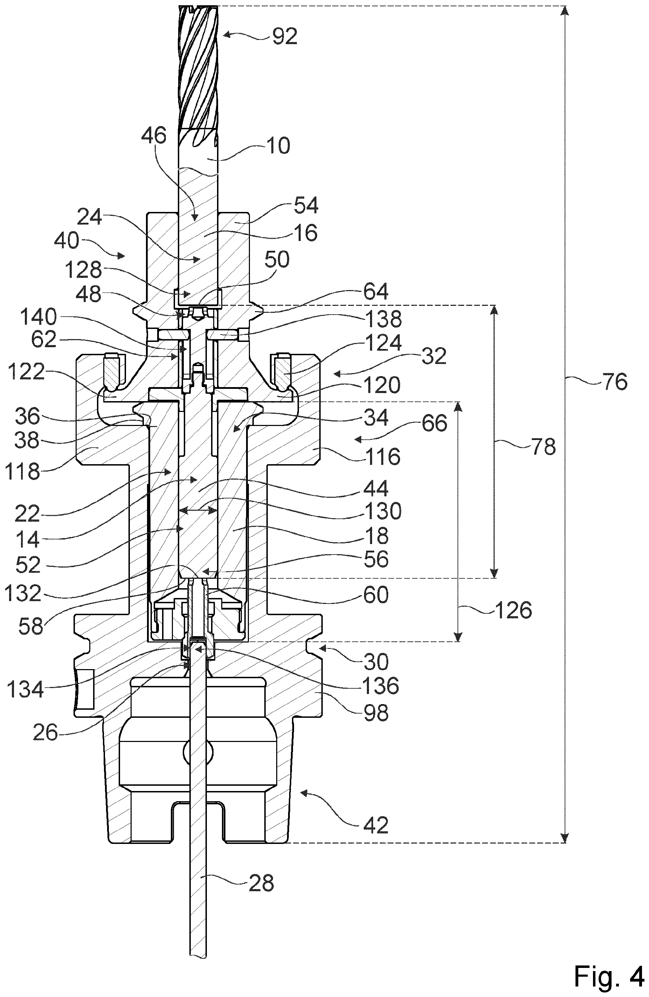

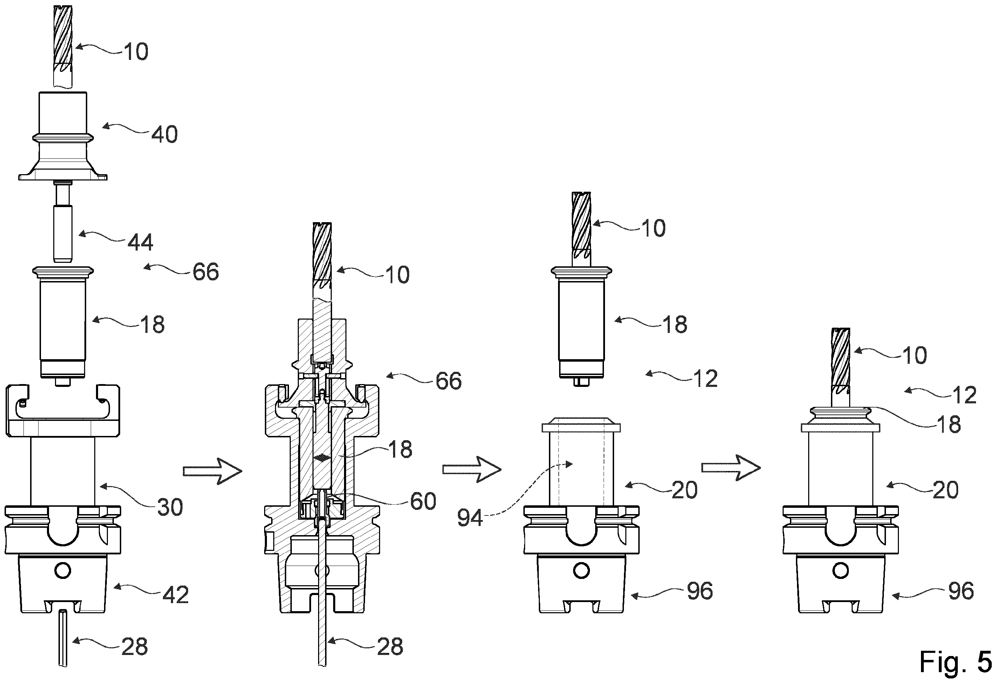

Die Figur 1 zeigt eine schematische perspektivische Darstellung eines Werkzeugeinstell- und/oder Werkzeugmessgeräts 82. Das Werkzeugeinstell- und/oder Werkzeugmessgerät 82 ist als ein optisches Werkzeugeinstell- und/oder Werkzeugmessgerät 82 ausgebildet. Alternative, auf nicht-optischen Messungen basierende Werkzeugeinstell- und/oder Werkzeugmessgeräte sind jedoch ebenfalls denkbar. Das Werkzeugeinstell- und/oder Werkzeugmessgerät 82 weist eine Kamera 84 auf. Die Kamera 84 bildet eine Einstell- und/oder Messkamera des Werkzeugeinstell- und/oder Werkzeugmessgeräts 82. Die Kamera 84 ist zumindest zu einer Durchführung eines Messverfahrens / einer Vermessungsfunktion des Werkzeugeinstell- und/oder Werkzeugmessgeräts 82 vorgesehen. Das Werkzeugeinstell- und/oder Werkzeugmessgerät 82 weist eine Längeneinstelleinrichtung 88 mit einem Längeneinstellpin 28 ("asza-Pin") auf. Die Längeneinstelleinrichtung 88 ist zu einer axialen Positionierung eines Werkzeugs 10 in einem Werkzeugfutter 12 (vgl. jeweils Fig. 5) vorgesehen. Das Werkzeugeinstell- und/oder Werkzeugmessgerät 82 weist eine Halteeinrichtung 86 zur Halterung von Werkzeugfuttern 12 und/oder Adaptern 66 (vgl. u.a. Fig. 4) während des Messvorgangs mit der Kamera 84 und/oder während eines Einstellvorgangs mit der Längeneinstelleinrichtung 88 auf. Das Werkzeugeinstell- und/oder Werkzeugmessgerät 82 weist eine Recheneinheit 90, insbesondere einen Rechner, auf. Die Recheneinheit 90 ist in der Fig. 1 beispielhaft in das Werkzeugeinstell- und/oder Werkzeugmessgerät 82 integriert ausgebildet, insbesondere einstückig mit einer Recheneinheit 90 des Werkzeugeinstell- und/oder Werkzeugmessgeräts 82 ausgebildet. Unter einer "Recheneinheit 90" soll insbesondere eine Einheit mit einem Informationseingang, einer Informationsverarbeitung und einer Informationsausgabe verstanden werden. Vorteilhaft weist die Recheneinheit 90 zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit 90 auf einer gemeinsamen Platine angeordnet und/oder vorteilhaft in einem gemeinsamen Gehäuse angeordnet. Alternativ könnte die Recheneinheit 90 auch getrennt von dem Werkzeugeinstell- und/oder Werkzeugmessgerät 82 ausgebildet sein und mit dem Werkzeugeinstell- und/oder Werkzeugmessgerät 82 in Verbindung stehen (z.B. Cloud-Computing). In der Figur 1 ist zudem schematisch ein Teil eines Handhabungsroboters 80 mit einem beispielhaften Robotergreifer 144 dargestellt.

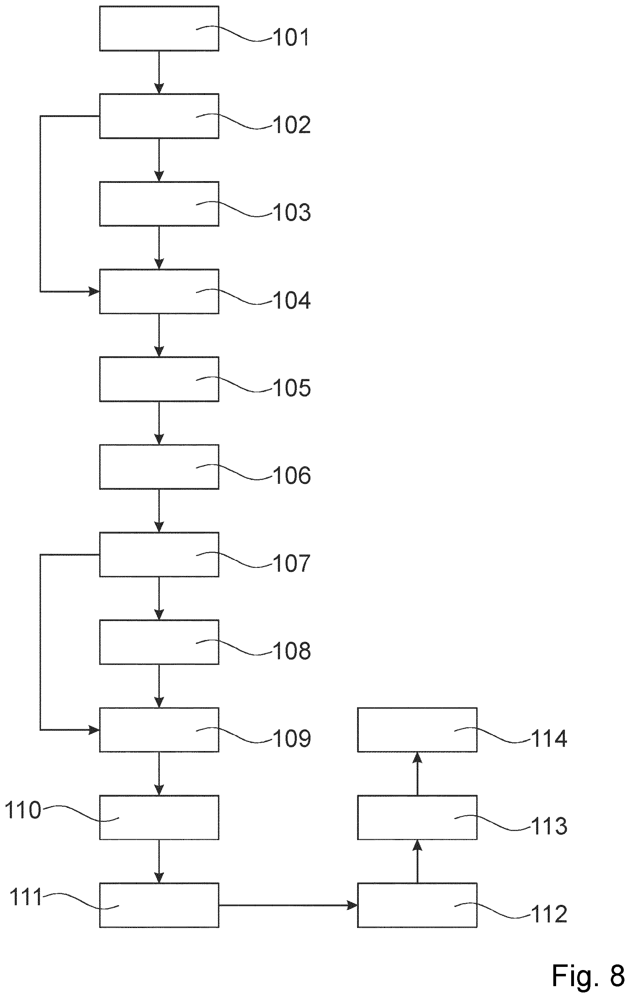

Die Recheneinheit 90 ist zumindest mit Hilfe der Kamera 84 und der Längeneinstellvorrichtung 88 zu einer Durchführung von Verfahrensschritten eines im Zusammenhang mit der Figur 8 beschriebenen Längeneinstellverfahrens vorgesehen. Die Recheneinheit 90 umfasst dazu ein gespeichertes Computerprogrammprodukt. Das Computerprogrammprodukt könnte auch auf externen Datenträgern oder in einer Computerprogramm-Recheninfrastruktur gespeichert sein. Das Computerprogrammprodukt umfasst ein Computerprogramm mit Befehlen, die bei einer Ausführung durch die Recheneinheit 90 diese veranlassen, die ihr zugeordneten Schritte des beschriebenen Längeneinstellverfahrens auszuführen.

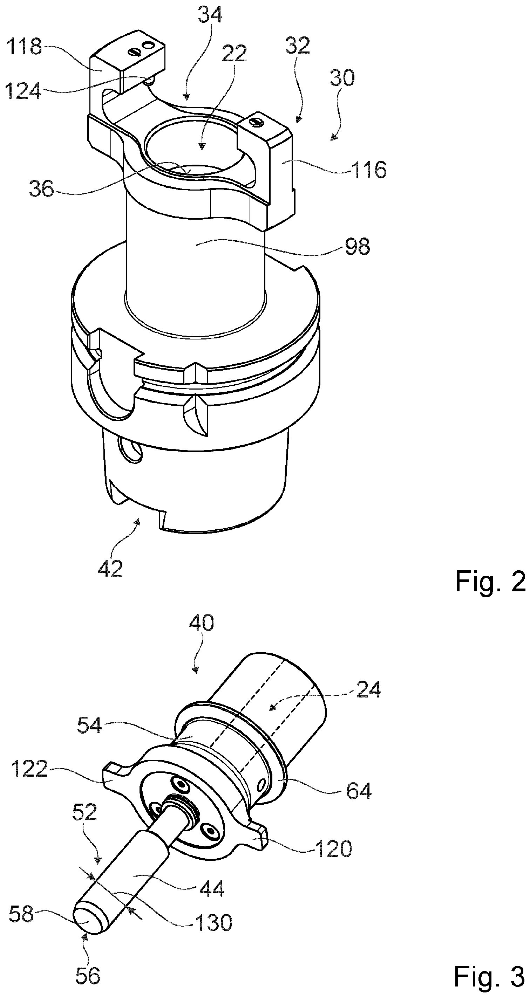

Die Figur 2 zeigt eine schematische perspektivische Darstellung eines ersten Adapterteils 30 eines Adapters 66. Die Figur 3 zeigt eine schematische perspektivische Darstellung eines zweiten Adapterteils 40 des Adapters 66. Das erste Adapterteil 30 und das zweite Adapterteil 40 sind voneinander separierbar und getrennt ausgebildet. Die Figur 4 zeigt eine schematische Schnittdarstellung des Adapters 66 mit beiden Adapterteilen 30, 40, mit einem Werkzeug 10, mit einer Spannzange 18 eines Werkzeugfutters 12 und mit dem Längeneinstellpin 28. Das Werkzeug 10 ist ein Schaftwerkzeug. Das Werkzeug 10 weist einen Werkzeugschaft 16 auf. Das Werkzeug 10 weist einen Werkstückbearbeitungsbereich 92 auf.

Der Adapter 66 ist zu einer Unterstützung einer automatisierten Längeneinstellung des Werkzeugs 10 in ein Werkzeugfutter 12 vorgesehen. Der Adapter 66 ist zu einer Unterstützung einer automatisierten Längeneinstellung des Werkzeugs 10 in ein powRgrip^{®}-Werkzeugfutter 12 vorgesehen. In der Figur 5 ist ein entsprechendes Werkzeugfutter 12 dargestellt. Das Werkzeugfutter 12 umfasst die Spannzange 18. Die Spannzange 18 weist eine Aufnahmeausnehmung 14 auf. Die Aufnahmeausnehmung 14 der Spannzange 18 ist zu einer Aufnahme des Werkzeugschafts 16 des Werkzeugs 10 vorgesehen. Die Spannzange 18 umfasst eine Längeneinstellschraube 60. Die Längeneinstellschraube 60 ist an einem inneren Ende der Aufnahmeausnehmung 14 der Spannzange 18 angeordnet. Die Längeneinstellschraube 60 bildet einen Anschlag 132 für Werkzeugschäfte 16 der in die Spannzange 18 eingeführten Werkzeuge 10 aus. Eine axiale Position der Längeneinstellschraube 60 ist einstellbar / änderbar. Zur Verstellung der Längeneinstellschraube 60 wird die Längeneinstellschraube 60 rotiert, z.B. mit Hilfe des Längeneinstellpins 28. Die Längeneinstellschraube 60 weist eine Werkzeugfläche 134 auf. Die Werkzeugfläche 134 kann als ein Innensechskant ausgebildet sein. Die Werkzeugfläche 134 ist komplementär zu einer Werkzeugfläche 136 des Längeneinstellpins 28 ausgebildet. Die Werkzeugfläche 136 des Längeneinstellpins 28 kann als ein zu dem Innensechskant der Längeneinstellschraube 60 korrespondierender Außensechskant ausgebildet sein oder umgekehrt. Andere bekannte Arten von korrespondierenden Werkzeugflächen 134, 136 sind jedoch ebenfalls möglich. Die Werkzeugflächen 134, 136 sind zu einer Übertragung einer Rotationsbewegung des Längeneinstellpins 28 auf die Längeneinstellschraube 60 vorgesehen.

Das Werkzeugfutter 12 umfasst einen Spannzangenhalter 20. Der Spannzangenhalter 20 weist eine Einpressausnehmung 94 auf. Die Einpressausnehmung 94 ist zu einer Aufnahme der Spannzange 18 vorgesehen. Die Spannzange 18 wird bei der Montage in den Spannzangenhalter 20 mit einer hohen Presskraft in die Einpressausnehmung 94 eingepresst. Durch das Einpressen wird die Spannzange 18 gespannt, wodurch ein in der Aufnahmeausnehmung 14 der Spannzange 18 positioniertes Werkzeug 10 in dem Werkzeugfutter 12 fixiert wird. Der Spannzangenhalter 18 weist zudem eine Schnittstelleneinheit 96 zu einem Montieren des Werkzeugfutters 12 an eine Werkzeugmaschine oder dergleichen (nicht dargestellt) auf. Die Schnittstelleneinheit 96 ist normiert, z.B. eine HSK-Schnittstelle oder eine SK-Schnittstelle. Der Spannzangenhalter 20 ist von der Spannzange 18 separierbar und getrennt ausgebildet. Der Adapter 66 ist zu einer Unterstützung der insbesondere automatisierten Längeneinstellung des Werkzeugs 10 in das Werkzeugfutter 12, dessen Werkzeugspannprinzip auf dem Verpressen der die Aufnahmeausnehmung 14 für den Werkzeugschaft 16 aufweisenden Spannzange 18 mit dem von der Spannzange 18 separierbaren Spannzangenhalter 20 basiert, vorgesehen.

Der Adapter weist das erste Adapterteil 30 (vgl. insbesondere die Figuren 2 und 4) auf. Das erste Adapterteil 30 weist einen Haltebereich 22 für eine, insbesondere aufrechte, Halterung der Spannzange 18 des einzustellenden Werkzeugfutters 12 auf. Das erste Adapterteil 30 weist eine Schnittstelleneinheit 42 zu einem, insbesondere aufrechten, Einsetzen des ersten Adapterteils 30 in die Halteeinrichtung 86 des Werkzeug-Einstell- und Werkzeug-Messgeräts 82 auf. Das erste Adapterteil 30 bildet eine an ein axiales Ende 34 des Haltebereichs 22 anschließende Plananlagefläche 36 für einen Anlagekragen 38 der Spannzange 18 aus. Der Haltebereich 22 des ersten Adapterteils 30 ist an Dimensionen der Spannzange 18, also z.B. an eine Spannzangenlänge 126 der Spannzange 18 und/oder an einen Spannzangendurchmesser 74 der Spannzange 18 angepasst. Die Schnittstelleneinheit 42 des ersten Adapterteils 30 weist einen identischen Schnittstellentyp auf wie die Schnittstelleneinheit 96 des Werkzeugfutters 12. Die Schnittstelleneinheit 42 des ersten Adapterteils 30 ist identisch zu der Schnittstelleneinheit 96 des Werkzeugfutters, dessen Spannzange 18 mit Hilfe des das erste Adapterteil 30 aufweisenden Adapters 66 eingestellt werden soll. Die Schnittstelleneinheit 42 des ersten Adapterteils 30 ist normiert, z.B. eine HSK-Schnittstelle oder eine SK-Schnittstelle. Das erste Adapterteil 30 weist eine in den Haltebereich 22 mündende axiale Durchgangsbohrung 26 auf. Die Durchgangsbohrung 26 ist zu einer Aufnahme des Längeneinstellpins 28 vorgesehen.

Das erste Adapterteil 30 weist eine Verbindungseinheit 32 zu einer zumindest axialen Halterung des zweiten Adapterteils 40 auf. Die Verbindungseinheit 32 umfasst einen ersten Haltearm 116. Die Verbindungeinheit 32 umfasst einen zweiten Haltearm 118. Die Haltearme 116, 118 stehen in Radialrichtung von dem Haltebereich des ersten Adapterteils 30 ab. Die Haltearme 116, 118 stehen in Axialrichtung von dem Haltebereich des ersten Adapterteils 30 ab. Die Haltearme 116, 118 sind jeweils dazu vorgesehen, einen Haltevorsprung 120, 122 des zweiten Adapterteils 40 zu umgreifen. Durch das Umgreifen sollen Endbereiche der Haltearme 116, 118 die Haltevorsprünge 120, 122 in Axialrichtung zu dem ersten Adapterteil 30, insbesondere zu mit einem Grundkörper 98 des ersten Adapterteils 30 verbundenen gegenüberliegenden Endbereichen der Haltearme 116, 118, hin drücken. Jeder der Haltearme 116, 118 weist ein Haltekraft-Einstellelement 124 auf. Die Haltekraft-Einstellelemente 124 sind beispielhaft als Kugeldruckschrauben / Kugeldruckstücke ausgebildet. Andere Ausgestaltungen sind jedoch ebenfalls denkbar. Die Haltekraft-Einstellelemente 124 kontaktieren die Haltevorsprünge 120, 122 des zweiten Adapterteils 40 und pressen sie gemeinsam mit einem Rest des zweiten Adapterteils 40 in Richtung des ersten Adapterteils 30. Die Haltekraft-Einstellelemente 124 kontaktieren die Haltevorsprünge 120, 122 des zweiten Adapterteils 40 und pressen sie gemeinsam mit einem Rest des zweiten Adapterteils 40 auf die in dem Haltebereich 22 des ersten Adapterteils 30 angeordnete Spannzange 18. Eine Herstellung der Verbindung der Verbindungseinheit 32, d.h. insbesondere zwischen den Haltearmen 116, 118 und den Haltevorsprüngen 120, 122, kann durch ein Ineinander-Einsetzen und anschließendes Zueinander-Verdrehen, insbesondere analog zu einem Bajonettverschluss, erfolgen.

Der Adapter 66 weist das zweite Adapterteil 40 auf (vgl. insbesondere Figur 3 und 4). Das zweite Adapterteil 40 weist einen Aufnahmebereich 24 für den Werkzeugschaft 16 des einzustellenden Werkzeugs 10 auf. Der Aufnahmebereich 24 weist eine Aufnahmeöffnung 46 auf. Der Werkzeugschaft 16 ist über die Aufnahmeöffnung 46 in den Aufnahmebereich 24 einführbar. Der Aufnahmebereich 24 des zweiten Adapterteils 40 ist derart dimensioniert, dass der Werkzeugschaft 16 des einzustellenden Werkzeugs 10 axialbeweglich bleibt und dennoch das Werkzeug 10 in dem Aufnahmebereich 24 nicht kippen kann. Der Aufnahmebereich 24 des zweiten Adapterteils 40 ist zu einer Herstellung einer Spielpassung oder einer Übergangspassung mit dem Werkzeugschaft 16 des in dem Werkzeugfutter 12 einzustellenden Werkzeugs 10 vorgesehen.

Das zweite Adapterteil 40 weist eine Hubstange 44 auf. Die Hubstange 44 ragt in den Aufnahmebereich 24 des zweiten Adapterteils 40 hinein. Die Hubstange 44 ragt von einer der Aufnahmeöffnung 46 des Aufnahmebereichs 24 gegenüberliegenden Seite in den Aufnahmebereich 24 hinein. Die Hubstange 44 bildet einen Anschlag 50 für den Werkzeugschaft 16 des einzustellenden Werkzeugs 10, insbesondere für ein axiales Ende 128 des Werkzeugschafts 16 des einzustellenden Werkzeugs 10, aus. Die Hubstange 44 bildet den Anschlag 50 an einem dem Aufnahmebereich 24 zugewandten axialen Ende 48 der Hubstange 44 aus. Der Anschlag 50 ist in seiner Form einem Ende der Längeneinstellschraube 60 nachgebildet. In den Aufnahmebereich 24 eingeführte Werkzeuge 10 werden stets so weit in den Aufnahmebereich 24 eingesteckt, dass sie in Kontakt mit dem Anschlag 50 sind. Das zweite Adapterteil 40 weist einen Grundkörper 54 auf. Der Grundkörper 54 bildet den Aufnahmebereich 24 aus und umschließt den Aufnahmebereich 24 zumindest radial. Der Aufnahmebereich 24 kann einen Teil der Hubstange 44 und einen Teil des Werkzeugs 10 aufnehmen. Der Aufnahmebereich 24 erstreckt sich durch das gesamte zweite Adapterteil 40.

Die Hubstange 44 weist einen Teilbereich 52 auf, welcher auf einer von der Aufnahmeöffnung 46 des Aufnahmebereichs 24 wegweisenden Seite des zweiten Adapterteils 40 über den Grundkörper 54 des zweiten Adapterteils 40 axial hinaussteht. Der axial über den Grundkörper 54 hinausstehende Teilbereich 52 der Hubstange 44 ist dazu vorgesehen, in die Aufnahmeausnehmung 14 der Spannzange 18 versenkt zu werden. Die Dimensionierung zumindest des über den Grundkörper 54 hinausstehenden Teilbereichs 52 der Hubstange 44 ist an den Spannzangendurchmesser 74 der Spannzange 18 des einzustellenden Werkzeugfutters 12 angepasst. Ein maximaler Außendurchmesser 130 des über den Grundkörper 54 hinausstehenden Teilbereichs 52 der Hubstange 44 ist derart dimensioniert, dass die Hubstange 44 in der Spannzange 18 axialbeweglich bleibt und dennoch das zweite Adapterteil 40 nicht kippen kann. Die Hubstange 44 ist zu einer Herstellung einer Spielpassung oder einer Übergangspassung mit der Aufnahmeausnehmung 14 der Spannzange 18 des einzustellenden Werkzeugfutters 12 vorgesehen.

Der axial über den Grundkörper 54 hinausstehende Teilbereich 52 der Hubstange 44 weist einen Anschlag 58 auf. Der Anschlag 58 des axial über den Grundkörper 54 hinausstehenden Teilbereichs 52 der Hubstange 44 ist für ein Anschlagen der Längeneinstellschraube 60 der Spannzange 18 an ein von dem Aufnahmebereich 24 abgewandtes axiales Ende 56 der Hubstange 44 vorgesehen. Die Hubstange 44 ist zu einem Übertragen von axialen Verstellbewegungen der Längeneinstellschraube 60 der Spannzange 18 an den Werkzeugschaft 16 des in dem Aufnahmebereich 24 des zweiten Adapterteils 40 aufgenommenen Werkzeugs 10 vorgesehen. Eine axiale Gesamtlänge 78 der Hubstange 44 ist konstant. Die axiale Gesamtlänge 78 der Hubstange 44 ist in der Recheneinheit 90 abgespeichert.

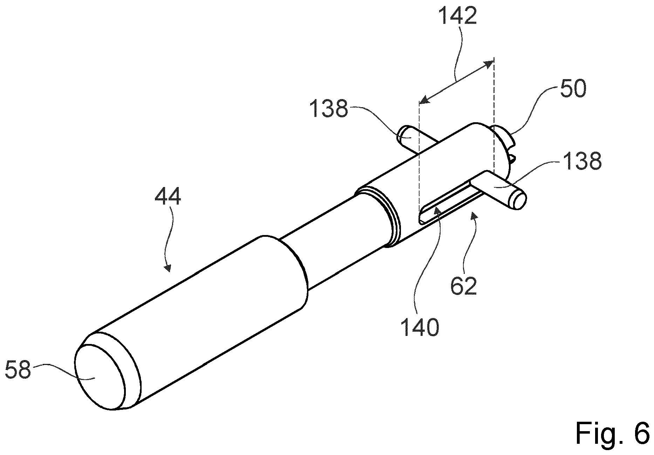

Die Hubstange 44 weist eine Verdrehsicherung 62 auf (vgl. auch Figur 6). Die Verdrehsicherung 62 ist dazu vorgesehen, bei einem Auf-Anschlag-Liegen der Hubstange 44 mit der Längeneinstellschraube 60 der Spannzange 18 ein Mitrotieren der Hubstange 44 mit einer Rotationsbewegung der Längeneinstellschraube 60 zur Einstellung der axialen Position der Längeneinstellschraube 60 zu verhindern. Die Verdrehsicherung 62 ist als wenigstens eine axial erstreckte Nut 140 in der Hubstange 44 ausgebildet. Im in den Figuren dargestellten Ausführungsbeispiel umfasst die Verdrehsicherung 62 zwei gegenüberliegende zueinander parallele axial erstreckte Nuten 140. Alternative Ausgestaltungen von Verdrehsicherungen, z.B. als radial von der Hubstange 44 abstehende Vorsprünge, sind jedoch ebenfalls denkbar. Die wenigstens eine axial erstreckte Nut 140 in der Hubstange 44 ist zu einem Eingriff eines Pins 138 vorgesehen. Der Pin 138 ist positionsfest mit dem Grundkörper 56 des zweiten Adapterteils 40 verbunden. Alternativ könnte der Pin 138 oder ein in die wenigstens eine axial erstreckte Nut 140 in der Hubstange 44 eingreifender Vorsprung auch direkt einstückig oder monolithisch mit dem Grundkörper 56 des zweiten Adapterteils 40 ausgebildet sein. Durch den Eingriff des Pins 138 in die Nut 140 wird eine Rotation der Hubstange 44 verunmöglicht. Der Pin 138 kann jedoch axial in der Nut 140 verschoben werden. Eine Axialbeweglichkeit der Hubstange 44 in dem zweiten Adapterteil 40 und in der Spannzange 18 ist damit durch Pin 138 und Nut 140 nicht beeinträchtigt. Eine Axialerstreckung 142 der Nut 140 ist groß genug, dass alle möglichen Einstellpositionen der Längeneinstellschraube 60 erreichbar sind.

Das zweite Adapterteil 40 weist ein Schnittstellenelement 64 für Robotergreifer 144 (siehe Fig. 1) auf. Das Schnittstellenelement 64 weist eine Kontur auf, welche eine Kopplung mit dem Robotergreifer 144 ermöglicht.

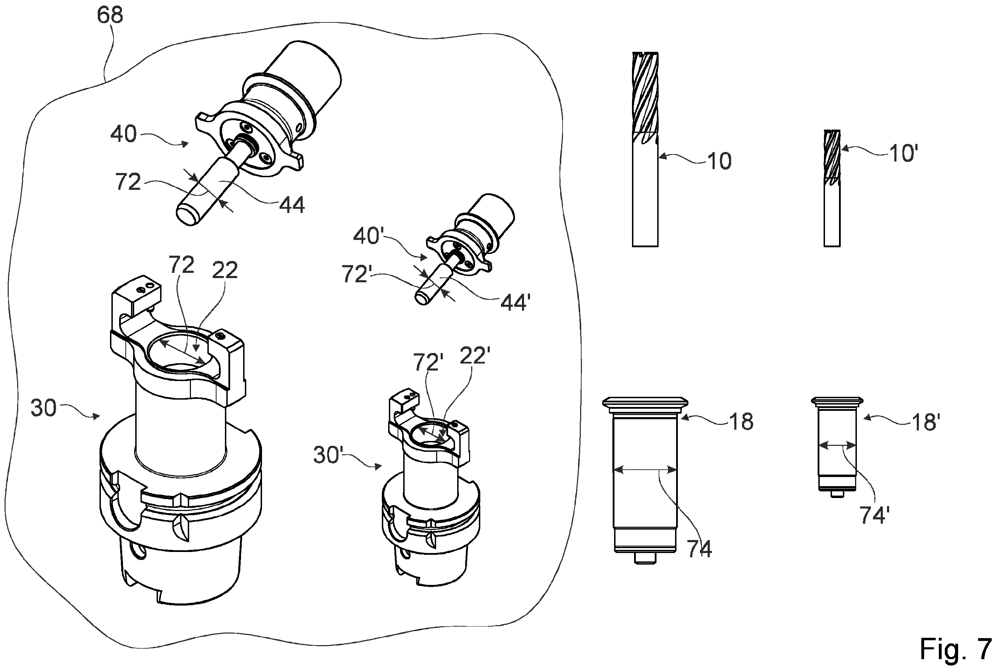

Die Figur 7 zeigt schematisch einen beispielhaften Adapterbaukasten 68. Der Adapterbaukasten 68 ist zu einer Bereitstellung einer Mehrzahl an für verschiedene Werkzeuge 10, 10' und verschiedene Werkzeugfutter 12, insbesondere mit verschiedenen Spannzangen 18, 18', geeigneten Adaptern 66 vorgesehen. Der Adapterbaukasten 68 umfasst eine Mehrzahl an zueinander unterschiedlichen ersten Adapterteilen 30, 30'. Die Haltebereiche 22 der unterschiedlichen ersten Adapterteile 30, 30' weisen jeweils unterschiedlich große Durchmesser 70, 70' für die Aufnahme unterschiedlich großer, insbesondere normierter, Spannzangen 18, 18' auf. Der Adapterbaukasten 68 umfasst eine Mehrzahl an zueinander unterschiedlichen zweiten Adapterteilen 40, 40'. Die Hubstangen 44 und/oder Aufnahmebereiche 24 der unterschiedlichen zweiten Adapterteile weisen jeweils unterschiedlich große Durchmesser 72, 72' auf, welche jeweils auf, insbesondere normierte, die unterschiedlichen Spannzangendurchmesser 74, 74' der Aufnahmeausnehmungen 14 der unterschiedlich großen Spannzangen 18, 18' angepasst sind. In der Figur 7 sind beispielhaft zwei unterschiedliche erste Adapterteile 30, 30', zwei unterschiedliche zweite Adapterteile 40, 40', zwei unterschiedliche Werkzeuge 10, 10' und zwei unterschiedliche Spannzangen 18, 18' dargestellt. Es ist jedoch denkbar, dass der Adapterbaukasten 68 mehr als zwei unterschiedliche erste Adapterteile 30 und/oder mehr als zwei unterschiedliche zweite Adapterteile 40 für mehr als zwei unterschiedliche Werkzeuge 10 und/oder für mehr als zwei unterschiedliche Spannzangen 18 umfasst.

Die Figur 8 zeigt ein schematisches Ablaufdiagramm eines Längeneinstellverfahrens zu einer Einstellung einer Einspannlänge des Werkzeugs 10 in dem Werkzeugfutter 12, dessen Werkzeugspannprinzip auf dem Verpressen der die Aufnahmeausnehmung 14 für den Werkzeugschaft 16 aufweisenden Spannzange 18 mit dem von der Spannzange 18 separierbaren Spannzangenhalter 20 basiert (wie das powRgrip^{®}-Werkzeugfutter) mit Hilfe des Adapters 66. In zumindest einem Verfahrensschritt 101 wird die Spannzange 18 in den Haltebereich 22 des ersten Adapterteils 30 des Adapters 66 eingesetzt. In zumindest einem Verfahrensschritt 102 wird das zweite Adapterteil 40 in das erste Adapterteil 30 eingesetzt. In dem Verfahrensschritt 102 wird die Hubstange 44 des zweiten Adapterteils 40 in die Aufnahmeausnehmung 14 der Spannzange 18 eingeführt. In zumindest einen optional auch überspringbaren Verfahrensschritt 103 werden die Axialpositionen der beiden Adapterteile 30, 40 zueinander verriegelt. In zumindest einem Verfahrensschritt 104 wird das Werkzeug 10 in den Aufnahmebereich 24 des zweiten Adapterteils 40 derart eingesetzt, so dass der Werkzeugschaft 16 des Werkzeugs 10 an einem axialen Ende 48 der Hubstange 44 anschlägt. In zumindest einem Verfahrensschritt 105 wird mittels des Werkzeug-Einstell- und Werkzeug-Messgeräts 82 eine axiale Länge 76 der Kombination aus den beiden Adapterteilen 30, 40 und dem Werkzeug 10, insbesondere optisch, vermessen. In dem Verfahrensschritt 105 wird anhand eines Durchlichtbilds und/oder eines Auflichtbilds der Kamera 84 eine hochgenaue Positionsbestimmung und Längenbestimmung des Werkzeugs 10 vorgenommen. In zumindest einem Verfahrensschritt 106 wird mittels der Recheneinheit 90 ein Einstellbedarf berechnet, um eine gewünschte / vorgegebene / notwendige axiale Längeneinstellung des in dem Werkzeugfutter 12 montierten Werkzeugs 10 zu erhalten. Dabei wird die bekannte axiale Gesamtlänge 78 der Hubstange 44 berücksichtigt. Die bekannte axiale Gesamtlänge 78 der Hubstange 44 kann beispielsweise bei der Bestimmung der gewünschten / vorgegebenen / notwendigen axialen Längeneinstellung herausgerechnet werden. In zumindest einem Verfahrensschritt 107 wird eine axiale Position der Längeneinstellschraube 60 der Spannzange 18 basierend auf den Messergebnissen des Werkzeug-Einstell- und Werkzeug-Messgeräts 82 eingestellt. Dazu wird die Längeneinstellschraube 60 weiter in die Spannzange 18 eingedreht oder weiter aus der Spannzange 18 herausgedreht. In dem Verfahrensschritt 107 wird eine Bewegung der Längeneinstellschraube 60 über die Hubstange 44 auf das Werkzeug 10 übertragen. In dem Verfahrensschritt 107 wird ausschließlich eine axiale Komponente der Bewegung der Längeneinstellschraube 60 über die Hubstange 44 auf das Werkzeug 10 übertragen. Dadurch wird das Werkzeug 10 in seiner Axialposition verstellt. Dabei wird die Axialposition des Werkzeugs 10 in dem zweiten Adapterteil 40 verändert. In zumindest einem optional auch überspringbaren Verfahrensschritt 108 wird die neue Längeneinstellung mittels einer erneuten Vermessung der axialen Länge 76 der Kombination aus den beiden Adapterteilen 30, 40 und dem Werkzeug 10 mittels des Werkzeug-Einstell- und Werkzeug-Messgeräts 82 kontrolliert. In zumindest einem Verfahrensschritt 109 wird das Werkzeug 10 aus dem zweiten Adapterteil 40 entnommen. In zumindest einem Verfahrensschritt 110 werden die beiden Adapterteile 30, 40 getrennt. Dabei wird die Hubstange 44 aus der Aufnahmeausnehmung 14 der nun eingestellten Spannzange 18 entfernt / herausgezogen.

In zumindest einem Verfahrensschritt 111 wird die Spannzange 18 aus dem Haltebereich 22 des ersten Adapterteils 30 entfernt / herausgezogen. In zumindest einem Verfahrensschritt 112 wird die die vorgenommene Einstellung der Längeneinstellschaube 60 beibehaltende Spannzange 18 in die Einpressausnehmung 94 des Spannzangenhalters 20 eingesetzt. In zumindest einem Verfahrensschritt 113 wird das Werkzeugs 10 in die Spannzange 18 eingesetzt. Das Werkzeug 10 wird dabei derart in die Spannzange 18 eingesetzt, dass dessen Werkzeugschaft 16 an der zuvor eingestellten Längeneinstellschraube 60 anschlägt. In zumindest einem Verfahrensschritt 114 wird die Spannzange 18 in die Einpressausnehmung 94 des Spannzangenhalters 20 eingepresst, sodass das Werkzeug 10 in der eingestellten axialen Position in dem Werkzeugfutter 12 fixiert wird. Insbesondere werden zumindest die Spannzange 18, das Werkzeug 10 und das erste Adapterteil 30 während des gesamten Verfahrensablaufs des Längeneinstellverfahrens ausschließlich von dem Robotergreifer 144 des Handhabungsroboters 80 bewegt.

### Bezugszeichen

- 10: Werkzeug
- 12: Werkzeugfutter
- 14: Aufnahmeausnehmung
- 16: Werkzeugschaft
- 18: Spannzange
- 20: Spannzangenhalter
- 22: Haltebereich
- 24: Aufnahmebereich
- 26: Durchgangsbohrung
- 28: Längeneinstellpin
- 30: Erstes Adapterteil
- 32: Verbindungseinheit
- 34: Axiales Ende
- 36: Plananlagefläche
- 38: Anlagekragen
- 40: Zweites Adapterteil
- 42: Schnittstelleneinheit
- 44: Hubstange
- 46: Aufnahmeöffnung
- 48: Axiales Ende
- 50: Anschlag
- 52: Teilbereich
- 54: Grundkörper
- 56: Axiales Ende
- 58: Anschlag
- 60: Längeneinstellschraube
- 62: Verdrehsicherung
- 64: Schnittstellenelement
- 66: Adapter
- 68: Adapterbaukasten
- 70: Durchmesser
- 72: Durchmesser
- 74: Spannzangendurchmesser
- 76: Axiale Länge
- 78: Axiale Gesamtlänge
- 80: Handhabungsroboter
- 82: Werkzeug-Einstell- und Werkzeug-Messgerät
- 84: Kamera
- 86: Halteeinrichtung
- 88: Längeneinstelleinrichtung
- 90: Recheneinheit
- 92: Werkstückbearbeitungsbereich
- 94: Einpressausnehmung
- 96: Schnittstelleneinheit
- 98: Grundkörper
- 101: Verfahrensschritt
- 102: Verfahrensschritt
- 103: Verfahrensschritt
- 104: Verfahrensschritt
- 105: Verfahrensschritt
- 106: Verfahrensschritt
- 107: Verfahrensschritt
- 108: Verfahrensschritt
- 109: Verfahrensschritt
- 110: Verfahrensschritt
- 111: Verfahrensschritt
- 112: Verfahrensschritt
- 113: Verfahrensschritt
- 114: Verfahrensschritt
- 116: Erster Haltearm
- 118: Zweiter Haltearm
- 120: Haltevorsprung
- 122: Haltevorsprung
- 124: Haltekraft-Einstellelement
- 126: Spannzangenlänge
- 128: Axiales Ende
- 130: Außendurchmesser
- 132: Anschlag
- 134: Werkzeugfläche
- 136: Werkzeugfläche
- 138: Pin
- 140: Nut
- 142: Axialerstreckung
- 144: Robotergreifer

## Patentansprüche

1. Adapter (66) zu einer Unterstützung einer automatisierten Längeneinstellung eines Werkzeugs (10) in ein Werkzeugfutter (12), dessen Werkzeugspannprinzip auf einem Verpressen einer eine Aufnahmeausnehmung (14) für einen Werkzeugschaft (16) aufweisenden Spannzange (18) mit einem von der Spannzange (18) separierbaren Spannzangenhalter (20) basiert, insbesondere in ein powRgrip^{®}-Werkzeugfutter, umfassend ein erstes Adapterteil (30), welches einen Haltebereich (22) für eine, insbesondere aufrechte, Halterung der Spannzange (18) des einzustellenden Werkzeugfutters (12) aufweist, und umfassend ein von dem ersten Adapterteil (30) getrennt ausgebildetes zweites Adapterteil (40), welches einen Aufnahmebereich (24) für den Werkzeugschaft (16) des einzustellenden Werkzeugs (10) aufweist.

2. Adapter (66) nach Anspruch 1, **dadurch gekennzeichnet, dass** das erste Adapterteil (30) eine in den Haltebereich (22) mündende axiale Durchgangsbohrung (26) aufweist, welche zu einer Aufnahme eines Längeneinstellpins (28) eines Werkzeug-Einstell- und Werkzeug- Messgeräts (82) vorgesehen ist.

3. Adapter (66) nach Anspruch 1 oder 2, **dadurch gekennzeichnet, dass** das erste Adapterteil (30) eine Verbindungseinheit (32) zu einer zumindest axialen Halterung des zweiten Adapterteils (40) aufweist.

4. Adapter (66) nach einem der vorhergehenden Ansprüche, **dadurch gekennzeichnet, dass** das erste Adapterteil (30) eine an ein axiales Ende (34) des Haltebereichs (22) anschließende Plananlagefläche (36) für einen Anlagekragen (38) der Spannzange (18) ausbildet.

5. Adapter (66) nach einem der vorhergehenden Ansprüche, **dadurch gekennzeichnet, dass** das erste Adapterteil (30) eine Schnittstelleneinheit (42) zu einem, insbesondere aufrechten, Einsetzen des ersten Adapterteils (30) in ein Werkzeug-Einstell- und Werkzeug-Messgerät (82) aufweist.

6. Adapter (66) nach einem der vorhergehenden Ansprüche, **dadurch gekennzeichnet, dass** das zweite Adapterteil (40) eine Hubstange (44) aufweist, welche von einer, einer Aufnahmeöffnung (46) des Aufnahmebereichs (24) gegenüberliegenden Seite in den Aufnahmebereich (24) hineinragt und welche an einem dem Aufnahmebereich (24) zugewandten axialen Ende (48) einen Anschlag (50) für den Werkzeugschaft (16) des einzustellenden Werkzeugs (10) ausbildet.

7. Adapter (66) nach einem der vorhergehenden Ansprüche, **dadurch gekennzeichnet, dass** das zweite Adapterteil (40) eine Hubstange (44) aufweist, welche einen Teilbereich (52) aufweist, der auf einer von einer Aufnahmeöffnung (46) des Aufnahmebereichs (24) wegweisenden Seite des zweiten Adapterteils (40) über einen den Aufnahmebereich (24) ausbildenden Grundkörper (54) des zweiten Adapterteils (40) axial hinaussteht.

8. Adapter (66) nach Anspruch 7, **dadurch gekennzeichnet, dass** der axial über den Grundkörper (54) hinausstehende Teilbereich (52) der Hubstange (44) dazu vorgesehen ist, in die Aufnahmeausnehmung (14) der Spannzange (18) versenkt zu werden.

9. Adapter (66) nach Anspruch 7 oder 8, **dadurch gekennzeichnet, dass** der axial über den Grundkörper (54) hinausstehende Teilbereich (52) der Hubstange (44) an einem von dem Aufnahmebereich (24) abgewandten axialen Ende (56) einen Anschlag (58) für eine Längeneinstellschraube (60) der Spannzange (18) aufweist.

10. Adapter (66) nach einem der Ansprüche 6 bis 9, **dadurch gekennzeichnet, dass** die Hubstange (44) zu einem Übertragen einer axialen Verstellbewegung einer Längeneinstellschraube (60) der Spannzange (18) an den Werkzeugschaft (16) eines in dem Aufnahmebereich (24) des zweiten Adapterteils (40) aufgenommenen Werkzeugs (10) vorgesehen ist.

11. Adapter (66) nach einem der Ansprüche 6 bis 9, **dadurch gekennzeichnet, dass** die Hubstange (44) eine Verdrehsicherung (62) aufweist.

12. Adapter (66) nach einem der vorhergehenden Ansprüche, **dadurch gekennzeichnet, dass** das zweite Adapterteil (40) ein Schnittstellenelement (64) für einen Robotergreifer (144) aufweist.

13. Erstes Adapterteil (30) eines Adapters (66) nach einem der vorhergehenden Ansprüche.

14. Zweites Adapterteil (40) eines Adapters (66) nach einem der Ansprüche 1 bis 12.

15. Adapterbaukasten (68) zu einer Bereitstellung einer Mehrzahl an für verschiedene Werkzeuge (10) und Werkzeugfutter (12) geeigneten Adaptern (66) nach einem der Ansprüche 1 bis 12, mit einer Mehrzahl an zueinander unterschiedlichen ersten Adapterteilen (30, 30'), deren Haltebereiche (22) jeweils unterschiedlich große Durchmesser (70, 70') für die Aufnahme unterschiedlich großer, insbesondere normierter, Spannzangen (18, 18') aufweisen, und mit einer Mehrzahl an zueinander unterschiedlichen zweiten Adapterteilen (40, 40'), deren Hubstangen (44) und/oder Aufnahmebereiche (24) jeweils unterschiedlich große Durchmesser (72, 72') aufweisen, die jeweils auf, insbesondere normierte, unterschiedliche Spannzangendurchmesser (74, 74') der Aufnahmeausnehmungen (14) der unterschiedlich großen Spannzangen (18, 18') angepasst sind.

16. Längeneinstellverfahren zu einer Einstellung einer Einspannlänge eines Werkzeugs (10) in einem Werkzeugfutter (12), dessen Werkzeugspannprinzip auf einem Verpressen einer eine Aufnahmeausnehmung (14) für einen Werkzeugschaft (16) aufweisenden Spannzange (18) mit einem von der Spannzange (18) separierbaren Spannzangenhalter (20) basiert, insbesondere in ein powRgrip^{®}-Werkzeugfutter, mit Hilfe eines Adapters (66) nach einem der Ansprüche 1 bis 12.

17. Längeneinstellverfahren nach Anspruch 16, **gekennzeichnet durch** die Verfahrensschritte (101, 102, 103, 104, 105, 106 ,107, 108, 109, 110, 111, 112, 113, 114):
- Einsetzen der Spannzange (18) in den Haltebereich (22) des ersten Adapterteils (30) des Adapters (66),
- Einsetzen des zweiten Adapterteils (40) in das erste Adapterteil (30), wobei eine Hubstange (44) des zweiten Adapterteils (40) in die Aufnahmeausnehmung (14) der Spannzange (18) eingeführt wird,
- optional Verriegeln der Axialpositionen der beiden Adapterteile (30, 40) zueinander,
- Einsetzen des Werkzeugs (10) in den Aufnahmebereich (24) des zweiten Adapterteils (40), so dass der Werkzeugschaft (16) des Werkzeugs (10) an einem axialen Ende (48) der Hubstange (44) anschlägt,
- Vermessen einer axialen Länge (76) der Kombination aus den beiden Adapterteilen (30, 40) und dem Werkzeug (10) mittels eines Werkzeug-Einstell- und Werkzeug-Messgeräts (82),
- Berechnen eines Einstellbedarfs, um eine gewünschte axiale Längeneinstellung des Werkzeugs (10) zu erhalten, wobei eine bekannte axiale Gesamtlänge (78) der Hubstange (44) berücksichtigt wird,
- Einstellen einer axialen Position einer Längeneinstellschraube (60) der Spannzange (18) basierend auf den Messergebnissen des Werkzeug-Einstell- und Werkzeug-Messgeräts (82), wobei eine Bewegung der Längeneinstellschraube (60), insbesondere lediglich eine axiale Komponente der Bewegung der Längeneinstellschraube, über die Hubstange (44) auf das Werkzeug (10) übertragen wird, welches dadurch in seiner Axialposition verstellt wird,
- optional Kontrollieren der Längeneinstellung mittels einer erneuten Vermessung der axialen Länge (76) der Kombination aus den beiden Adapterteilen (30, 40) und dem Werkzeug (10) mittels des Werkzeug-Einstell- und Werkzeug-Messgeräts (82),
- Entnehmen des Werkzeugs (10) aus dem zweiten Adapterteil (40),
- Trennen der beiden Adapterteile (30, 40),
- Entnehmen der Spannzange (18) aus dem ersten Adapterteil (30),
- Einsetzen der die Einstellung der Längeneinstellschaube (60) beibehaltenden Spannzange (18) in den Spannzangenhalter (20),
- Einsetzen des Werkzeugs (10) in die Spannzange (18) auf Anschlag mit der Längeneinstellschraube (60) und
- Spannen der Spannzange (18) durch Einpressen in den Spannzangenhalter (20), sodass das Werkzeug (10) in der eingestellten axialen Position in dem Werkzeugfutter (12) fixiert wird.

18. Längeneinstellverfahren nach Anspruch 16 oder 17, **dadurch gekennzeichnet, dass** zumindest die Spannzange (18), das Werkzeug (10) und das erste Adapterteil (30) während eines gesamten Verfahrensablaufs ausschließlich von einem oder mehreren Handhabungsrobotern (80) bewegt werden.
